# EUROPEAN PATENT APPLICATION

(11) **EP 2 075 142 A1**
(43) Date of publication of application: **01.07.2009**
(21) Application number: 08169749.2
(22) Date of filing: 24.11.2008
(51) Int. Cl.: B60G 7/00, B60G 9/02

(54) **Articulated suspension particularly for connection between the axle and the chassis of a work vehicle**

(30) Priority: 19.12.2007 IT PD20070417
(71) Applicant: Faresin Industries S.p.A., 26042 Breganze VI (IT)
(72) Inventor: Faresin, Sante, 36042 Breganze, Frazione Maragnole VI (IT)
(74) Representative: Modiano, Micaela Nadia

(57) **Abstract**

An articulated suspension (10), particularly for connection between the axle (11) and the chassis (12) of a work vehicle, which comprises elements (13) that yield elastically, in a damped manner, for supporting the chassis (12) on the axle (11), and arms (14) for connection between the axle (11) and the chassis (12). The arms (14) are connected to the chassis (12) and to the axle (11) by means of articulations (15) that form three axes of rotation (A, B, C) of the arms (14) with respect to the chassis (12) and the axle (11).

A first axis of rotation (A) is parallel to the axis of longitudinal extension of the arm (14), the second axis (B) is parallel to the longitudinal axis of the axle (11), and the third axis (C) is perpendicular to the first two axes (A, B).

The suspension (10) is adapted to allow the mutual rotation of the axle (11) and of the chassis (12) mainly about a roll axis (D) of the work vehicle.

## Description

The present invention relates to an articulated suspension, particularly for connection between the axle and the chassis of a work vehicle.

Currently, for vehicles designed to travel over uneven terrain, and among these particularly for transport vehicles, for work vehicles and for vehicles for agricultural use, the need is felt for suspensions that allow an adaptation of the wheels to the roughness of the terrain without compromising the balance of the vehicle.

One currently known solution aimed at meeting this requirement is provided with a suspension that comprises:
- elements that yield elastically, in a damped manner, for supporting the chassis of the vehicle on the axle of the wheels,
- a spherical joint articulation for connecting the axle to the chassis.

The spherical joint articulation in fact allows an orientation of the axle, with respect to the chassis, according to the three degrees of freedom of rotation.

This type of suspension has limits of relative rotation between the axle and the chassis beyond which they behave jointly, in order to provide assurance of stability to the vehicle.

Although this solution is particularly appreciated, since it allows to meet the described requirement, it is not free from drawbacks.

The structure of the spherical joint, as is known, in fact has an inherent fragility.

Further, in this application the spherical joint is the main connecting element between the axle and the chassis and therefore the stresses of interaction between them concentrate substantially thereon.

Particularly when this type of spherical joint reaches one of its limits of rotation, and therefore behaves as a rigid coupling, it is subjected to the most intense stresses.

The aim of the present invention is to provide an articulated suspension that has greater structural strength than the spherical joint.

Within this aim, an object of the invention is to provide a suspension that is equally effective, with respect to currently known suspensions, in ensuring the rotation of the axle with respect to the chassis according to multiple degrees of freedom.

Another object of the invention is to provide a suspension that is simple and easy to provide with relatively low costs.

This aim and these and other objects, which will become better apparent hereinafter, are achieved by an articulated suspension, particularly for connection between the axle and the chassis of a work vehicle, characterized in that it comprises elements that yield elastically, in a damped manner, for supporting the chassis of the vehicle on the axle, and arms for connection between said axle and said chassis which are connected to said chassis and to said axle by means of articulations that form three axes of rotation, with respect to said chassis and said axle, for each arm of said arms:
- a first axis of rotation, of said three axes of rotation, being substantially parallel to the axis of longitudinal extension of said arm,
- a second rotation axis, of said three axes of rotation, being substantially parallel to the longitudinal axis of said axle,
- a third rotation axis of said three rotation axes being substantially perpendicular to said first rotation axis and to said second rotation axis,
   said suspension being adapted to allow the mutual rotation of said axle and of said chassis mainly about a roll axis, substantially defined transversely to said second rotation axis by the anteroposterior direction of motion of said work vehicle.

Further characteristics and advantages of the invention will become better apparent from the following detailed description of a preferred but not exclusive embodiment of the suspension according to the invention, illustrated by way of non-limiting example in the accompanying drawings, wherein:

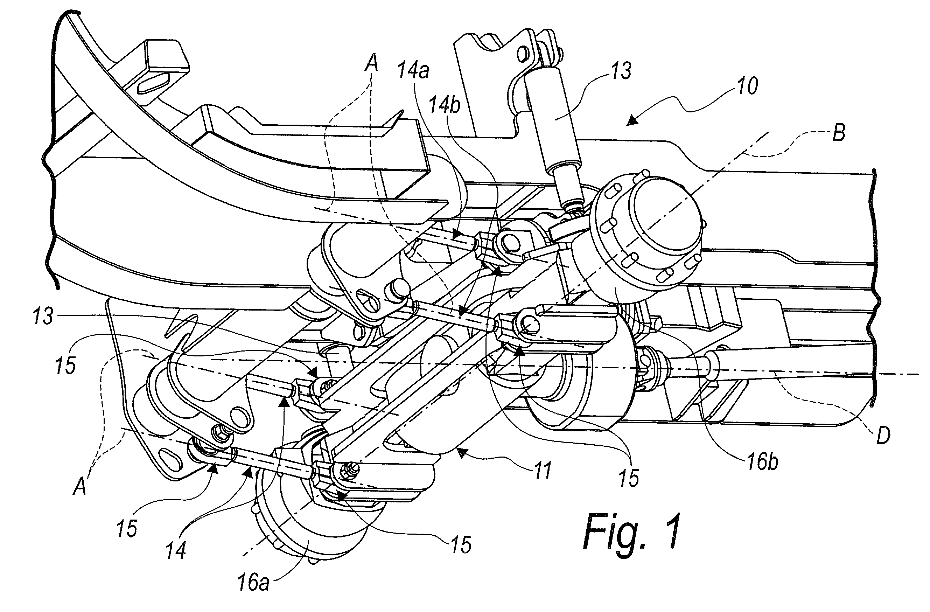

Figure 1 is a perspective view of an articulated suspension according to the invention;

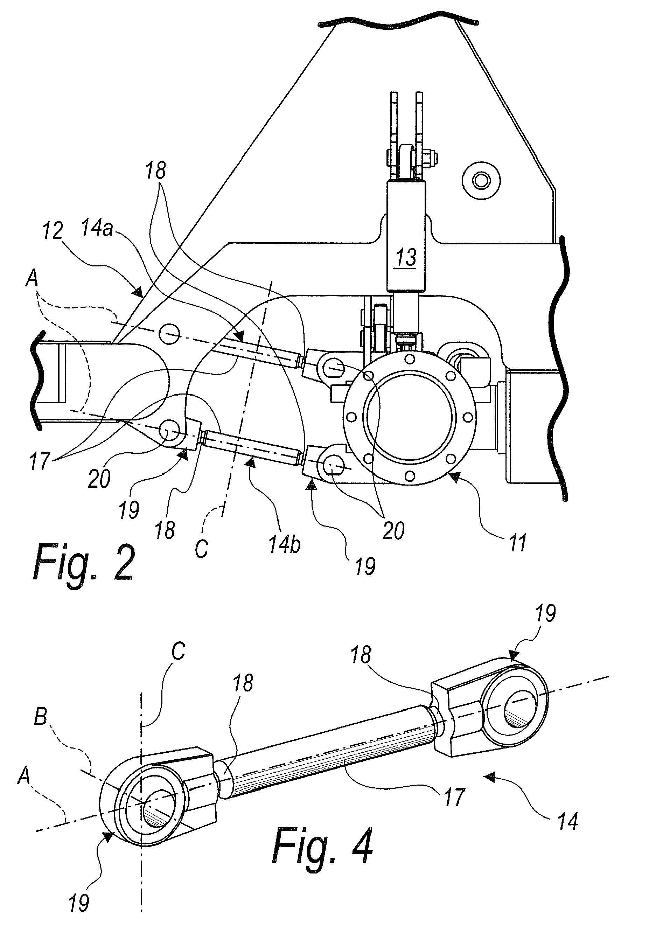

Figure 2 is a side elevation view of the articulated suspension according to the invention;

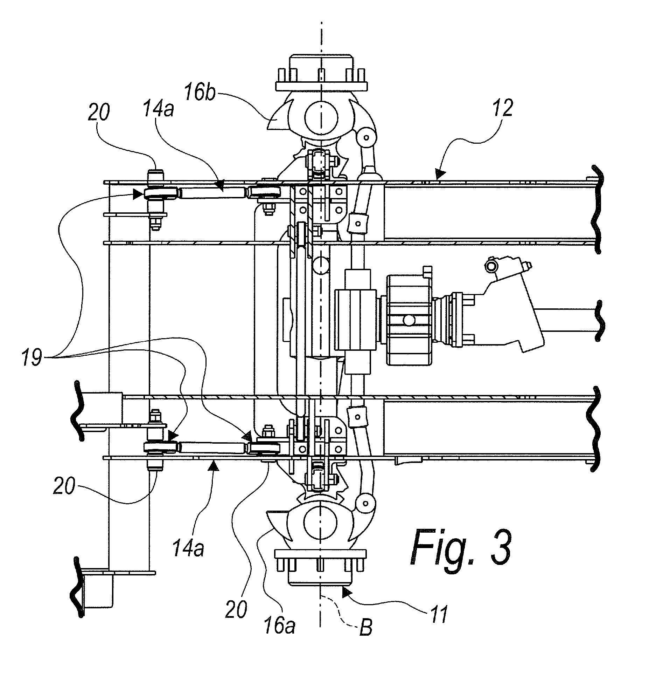

Figure 3 is a top plan view of the articulated suspension according to the invention;
Figure 4 is a perspective view of an arm of the articulated suspension according to the invention.

It is noted that anything found to be already known during the patenting process is understood not to be claimed and to be the subject of a disclaimer.

With reference to the figures, the reference numeral 10 designates an articulated suspension, particularly for connection between an axle 11 and a chassis 12 of a work vehicle, which according to the invention has the particularity that it comprises
- elements 13 that yield elastically in a damped manner and support the chassis 12 of the work vehicle on the axle 11, and
- arms 14 for connection between the axle 11 and the chassis 12, which are connected to the chassis 12 and to the axle 11 by means of articulations 15, which form, for each of the arms 14, three axes of rotation A, B and C, with respect to the chassis 12 and the axle 11.

A first rotation axis A of the three rotation axes A, B and C is substantially parallel to the axis of longitudinal extension of the arm 14.

A second rotation axis B of the three rotation axes A, B and C is substantially parallel to the longitudinal axis of the axle 11.

A third rotation axis C of the three rotation axes A, B and C is substantially perpendicular to the first rotation axis A and to the second rotation axis B.

The suspension 10 is thus adapted to allow the mutual rotation of the axle 11 and of the chassis 12 mainly about a roll axis D, which is substantially defined transversely to the second rotation axis B by the direction of anteroposterior movement of the work vehicle.

Advantageously, the suspension 10 comprises four arms 14, which are substantially parallel in pairs and connect the axle 11 to the chassis 12 according to a parallelogram configuration.

Two arms 14a and 14b of the arms 14 are conveniently substantially parallel and are associated proximate to each of two ends 16a and 16b of the axle 11, and their longitudinal axes are substantially parallel and arranged on a plane that is substantially perpendicular to the second rotation axis B.

More particularly, the arms 14 preferably comprise a stem 17, which is threaded at least at its ends 18.

Advantageously, the articulations 15 comprise spherical joint heads 19, conveniently of the ISO 6126 type, which are are screwed onto the ends 18 of the stem 17, pivots 20 for retaining the spherical joint heads 19 being fixed to the axle 11 and to the chassis 12.

Conveniently, the spherical joint heads 19 allow a rotation of approximately 12° of the arms 14 about two mutually perpendicular axes of rotation that lie on a plane that is perpendicular to the longitudinal axis of the pivots 20.

These last rotation axes correspond substantially to the first rotation axis A and to the third rotation axis C.

The operation of the suspension 10 according to the invention is as follows.

During use of the work vehicle, the axle 11 and the chassis 12 can be subjected to stresses that tend to cause a relative rotation thereof substantially about the roll axis D, for example when traveling over uneven terrain.

In this situation, the spherical joint heads 19 of the arms 14, being associated rotatably with the axle 11 and with the chassis 12, rotate with respect to them about the three rotation axes A, B and C, allowing the relative rotation of the axle 11 and of the chassis 12 about the roll axis D.

In this manner, the axle 11 is jointly retained to the chassis 12 by the arms 14, which simultaneously allow the mutual rotation of the two parts.

In practice it has been found that the invention achieves the proposed aim and objects, by providing an articulated suspension that has greater structural strength than the spherical joint, being however equally effective with respect to currently known suspensions in ensuring the rotation of the axle with respect to the chassis with multiple degrees of freedom.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2007A000417 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An articulated suspension (10), particularly for connection between an axle (11) and a chassis (12) of a work vehicle, **characterized in that i**t comprises elements (13) that yield elastically, in a damped manner, for supporting the chassis (12) of the work vehicle on the axle (11), and arms (14) for connection between said axle (11) and said chassis (12) which are connected to said chassis (12) and to said axle (11) by means of articulations (15) that form three axes of rotation (A, B, C), with respect to said chassis (12) and said axle (11), for each arm (14) of said arms (14):
- a first axis of rotation (A), of said three axes of rotation (A, B, C), being substantially parallel to the axis of longitudinal extension of said arm (14),
- a second rotation axis (B), of said three axes of rotation (A, B, C), being substantially parallel to the longitudinal axis of said axle (11),
- a third rotation axis (C) of said three rotation axes (A, B, C) being substantially perpendicular to said first rotation axis (A) and to said second rotation axis (B),
said suspension (10) being adapted to allow the mutual rotation of said axle (11) and of said chassis (12) mainly about a roll axis (D), substantially defined transversely to said second rotation axis (B) by the anteroposterior direction of motion of said work vehicle.

2. The suspension according to claim 1, **characterized in that** it comprises four arms (14), which are substantially parallel in pairs and connect said axle (11) to said chassis (12) according to a parallelogram configuration.

3. The suspension according to one or more of the preceding claims, **characterized in that** two arms (14a, 14b) of said arms (14), which are substantially parallel, are associated proximate to each of the two ends (16a, 16b) of said axle (11), their said longitudinal axes lying substantially parallel on a plane that is substantially perpendicular to said second axis of rotation (B).

4. The suspension according to one or more of the preceding claims, **characterized in that** said arms (14) comprise a stem (17) which is threaded at least at its ends (18), said articulations (15) comprising spherical joint heads (19) for said arms (14), which are screwed to said ends (18), pivots (20) for retaining said spherical joint heads (19) being fixed to said axle (11) and to said chassis (12).
